# EUROPEAN PATENT APPLICATION

(11) **EP 4 525 156 A1**
(43) Date of publication of application: **19.03.2025**
(21) Application number: 23850366.8
(22) Date of filing: 31.07.2023
(51) Int. Cl.: H01M 50/24, H01M 10/658, H01M 50/204

(54) **BATTERY PACK**

(30) Priority: 04.08.2022 KR 20220097560; 03.04.2023 KR 20230043322
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR); LEE, Jae Hyun, Daejeon 34122 (KR); YANG, Chang Hyeon, Daejeon 34122 (KR)
(74) Representative: Plasseraud IP
(86) International application number: PCT/KR2023/011110
(87) International publication number: WO 2024/029864

(57) **Abstract**

Disclosed herein relates to a battery pack including: a pack case including a lower case and an upper case that define an internal space; a plurality of battery cells within the internal space; and a pack gasket between the lower case and the upper case, wherein the pack gasket comprises: a first surface facing the upper case; a second surface opposite the first surface and facing the lower case; a first side part facing toward the internal space; and a second side part facing an external side of the pack case, and wherein the pack gasket includes a heat-resistant plastic member at least partially between the first side part and the second side part in any cross-section in a width direction.

## Description

### [Cross-Reference to Related Applications]

This application claims the benefit of and priority to Korean Patent Application No. 10-2022-0097560, filed on August 4, 2022, and Korean Patent Application No. 10-2023-0043322, filed on April 3, 2023, the disclosures of which are incorporated by reference in their entirety for all purposes as if fully set forth herein.

### [Technical Field]

The present disclosure relates to a battery pack, and more particularly to a battery pack in which safety can be improved by maintaining the sealing performance of the pack gasket even in the event of an internal flame.

### [Background]

Unlike primary batteries, secondary batteries can be charged and discharged multiple times. Secondary batteries are widely used as an energy source for a variety of wireless devices, including handsets, laptops, and cordless vacuum cleaners. Recently, the primary use of secondary batteries has shifted from mobile devices to mobility, as the manufacturing cost per unit capacity of secondary batteries has dramatically decreased due to improved energy density and economies of scale, and as the range of battery electric vehicles (BEVs) has increased to be on par with fueled vehicles.

The latest trends in the technological development of secondary batteries for mobility are the improvement of energy density and safety. Here, the energy density of a secondary battery is the maximum electrical energy the secondary battery can store divided by the mass of the secondary battery. A high energy density of a secondary battery is directly related to the driving efficiency and range of a mobility, and various research efforts are being conducted to improve the energy density of secondary batteries.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

### [Technical Problem]

The technical problem of the present disclosure is to provide a battery pack in which the sealing performance of the pack gasket is maintained even in the event of an internal flame, thereby improving safety.

### [Technical Solution]

To accomplish the technical problems, the present disclosure provides a battery pack including: a pack case including a lower case and an upper case that define an internal space; a plurality of battery cells within the internal space; and a pack gasket between the lower case and the upper case, wherein the pack gasket includes: a first surface facing the upper case; a second surface opposite the first surface and facing the lower case; a first side part facing toward the internal space; and a second side part facing an external side of the pack case, and wherein the pack gasket includes a heat-resistant plastic member at least partially between the first side part and the second side part in any cross-section in a width direction.

**In** some examples, the heat-resistant plastic member may extend at least partially along a coupling surface of the upper case and the lower case, and the heat-resistant plastic member may be positioned closer to the internal space than a center between the first side part and second side part.

**In** some examples, the pack gasket may include a gasket body part and the heat-resistant plastic member, the gasket body part may include a storing part, and the heat-resistant plastic member may be disposed within the storing part.

**In** some examples, the gasket body part may include: a first part interposed between the upper case and the lower case; and a second part extending from the first part into the internal space and extending along a sidewall of the upper case and/or the lower case.

**In** some examples, in a thickness direction of the first part, a size of the heat-resistant plastic member may be greater than a thickness of the first part.

**In** some examples, the heat-resistant plastic member may be arranged to overlap the first part across an entire thickness of the first part.

**In** some examples, the heat-resistant plastic member may be integrally formed or may be integrated with the gasket body part. **In** some examples, the heat-resistant plastic member may be integrated with the gasket body part by insert molding.

**In** some examples, the heat-resistant plastic member may include at least one resin selected from the group consisting of an acrylonitrile-based resin, an acrylic-based resin, a benzimidazole-based resin, an indoline-based resin, an imide-based resin, an amide-based resin, a phenylene oxide-based resin, a butylene terephthalate-based resin, a fluorine-based resin, and a copolymer thereof.

The present disclosure provides another battery pack including: a pack case including a lower case and an upper case that define an internal space; a plurality of battery cells within the internal space; and a pack gasket between the lower case and the upper case, wherein the pack gasket comprises a heat-resistant plastic member and a gasket body part extending along a coupling surface of the upper case and the lower case, and wherein the heat-resistant plastic member is integrated with the gasket body part.

**In** some examples, the gasket body part may include a storing part, and the heat-resistant plastic member may be inserted within the storing part.

**In** some examples, the heat-resistant plastic member may extend at least across a separation distance of the upper case and the lower case.

**In** some examples, the heat-resistant plastic member may be interposed at least partially between the upper case and the lower case.

**In** some examples, at least a part of the heat-resistant plastic member may be protruded from the gasket body part between the upper case and the lower case toward the internal space.

**In** some examples, the heat-resistant plastic member may not be interposed between the upper case and the lower case.

### [Advantageous Effects]

The battery pack of the present disclosure has the effect of improving safety by maintaining the sealing performance of the pack gasket even in the event of an internal flame.

The effects of the exemplary embodiments of the present disclosure are not limited to those mentioned above, and other effects not mentioned may be clearly derived and understood by one having ordinary skill in the art to which the exemplary embodiments of the present disclosure belong from the following description. **In** other words, unintended effects of practicing the exemplary embodiments of the present disclosure may also be derived from the exemplary embodiments of the present disclosure by one having ordinary skill in the art.

### [Brief Description of the Drawings]

The following drawings accompanying this specification illustrate preferred exemplary embodiments of the present disclosure and are intended to serve as a further understanding of the technical ideas of the present disclosure in conjunction with the detailed description of the invention that follows, so the present disclosure is not to be construed as limited to what is shown in such drawings.
FIG. 1 is a perspective view of a battery pack according to exemplary embodiments.
FIG. 2 is a perspective view of some elements of a battery pack according to exemplary embodiments.
FIG. 3 is a partial perspective view of a cross-section of the battery pack of FIG. 1 sectioned along line III-III' of FIG. 2.
FIG. 4 is a cross-sectional perspective view illustrating a key part of a pack gasket according to an exemplary embodiment of the present disclosure.
FIGS. 5 through 8 are partial cross-sectional perspective views of cross-sections of battery packs according to different embodiments of the present disclosure, respectively, sectioned along line III-III' of FIG. 2.
FIG. 9 is a partial perspective view of the battery pack 100 of an exemplary embodiment of the present disclosure.
FIG. 10 is a partial perspective view of a lower case installed with a pack gasket with a reinforced corner part.

### [Detailed Description]

Hereinafter, preferred embodiments of the concept of the present disclosure will be described in detail with reference to the accompanying drawings. However, the embodiments of the concept of the present disclosure may be modified in many other ways, and it should not be construed that the scope of the concept of the present disclosure is limited by the embodiments described below. It is preferred that the embodiments concepts of the present disclosure be construed as provided to more fully describe the concept of the present disclosure to one of ordinary skill in the art. Like designations often refer to like elements. Furthermore, the various elements and areas in the drawings are schematically depicted. Accordingly, the present disclosure is not limited by the relative sizes or spacings depicted in the accompanying drawings.

Terms such as first, second, and the like may be used to describe various components, but the components are not limited by such terms. The terms are used only to distinguish one component from another. For example, a first component may be named a second component, and vice versa, a second component may be named a first component, without departing from the scope of the concept of the present disclosure.

The terms used in this application is intended to describe certain embodiments only and is not intended to limit the concept of the present disclosure. The singular expression includes the plural unless the context clearly indicates otherwise. In this application, expressions such as "includes" or "has" are intended to designate the presence of the features, counts, steps, operations, components, parts, or combinations thereof described, and are not intended to preclude the possibility of the presence or addition of one or more other features, counts, operations, components, parts, or combinations thereof.

Unless otherwise defined, all terms used herein, including technical and scientific terms, shall have the same meaning as commonly understood by one of ordinary skill in the art to which the concept of the present disclosure belongs. It is further understood that such terms, as commonly used and as defined in dictionaries, shall be construed to have a meaning consistent with their meaning in the context of the art to which they relate, and shall not be construed in an unduly formal sense unless expressly defined herein.

A particular sequence of processes may be performed in a different order than that described when an embodiment is otherwise practicable. For example, two processes described in succession may be performed substantially simultaneously, or they may be performed in the opposite order from the order described.

In the accompanying drawings, variations in the illustrated shapes may be expected, for example, due to manufacturing techniques and/or tolerances. Accordingly, embodiments of the present disclosure should not be construed as limited to the specific shape of the areas illustrated herein, and should include, for example, variations in shapes resulting from the manufacturing process. All terms "and/or" used herein include each and every combination of one or more of the components mentioned. In addition, as used herein, the term "substrate" may refer to the substrate itself, or to a laminated structure comprising the substrate and a predetermined layer or film formed on its surface. Also, as used herein, the term "surface of the substrate" may refer to the exposed surface of the substrate itself, or to the outer surface of a predetermined layer or film formed on the substrate.

### (First embodiment)

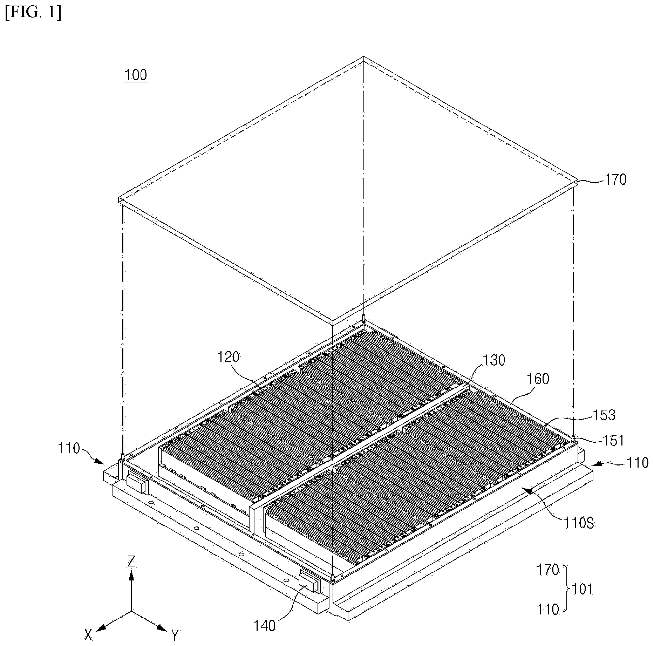

FIG. 1 is a perspective view of a battery pack 100 according to exemplary embodiments.

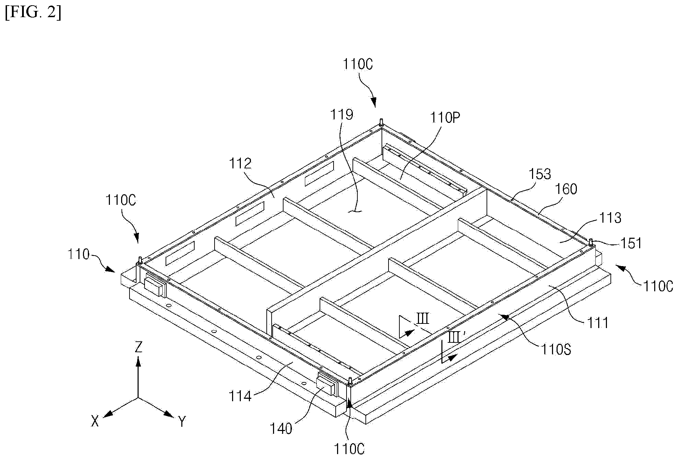

FIG. 2 is a perspective view illustrating some elements of the battery pack 100 according to exemplary embodiments.

Referring to FIGS. 1 and 2, the battery pack 100 may include a lower case 110, a plurality of battery assemblies 120 having battery cells, a center beam 130, a plurality of exhaust devices 140, a plurality of first embedment guides 151, a plurality of second embedment guides 153, a pack gasket 160, and an upper case 170. The battery pack 100 is the final form of a battery system mounted on a mobility or the like.

The pack case 101 corresponding to a housing of the battery pack 110 may include the lower case 110 and the upper case 170.

The lower case 110 may provide an internal space 119 for mounting a plurality of battery assemblies 120. In some embodiments, the lower case 110 may include a plate part 110P, and a sidewall 110S. Two directions substantially parallel to the plate part 110P are defined as the X direction and the Y direction, and a direction substantially perpendicular to the plate part 110P of the housing 110 is defined as the Z direction. Each of the X direction, the Y direction, and the Z direction may be substantially perpendicular to each other. Unless otherwise noted, the definitions of the directions are the same for the following drawings.

A plurality of battery assemblies 120 may be disposed on a plate part 110P of the lower case 110. The plate part 110P may support the plurality of battery assemblies 120. The plate part 110P may include a substantially parallel upper surface and lower surface. The upper surface of the plate part 110P may face the plurality of battery assemblies 120. The lower surface of the plate part 110P is the opposite surface of the upper surface of the plate part 110P.

The sidewall 110S may horizontally enclose the plurality of battery assemblies 120. The sidewall 110S may protect the plurality of battery assemblies 120 in a lateral direction. The sidewall 110S may include a first sidewall 111, a second sidewall 112, a third sidewall 113, and a fourth sidewall 114. The first to fourth sidewalls 111, 112, 113, 114 may be secured to each other by methods such as, but not limited to, friction stir welding, spot welding, and the like.

The first and second sidewalls 111, 112 may be substantially perpendicular to the Y direction. Each of the third and fourth sidewalls 113, 114 may be substantially perpendicular to the X direction. In some embodiments, the first and second sidewalls 111, 112 can cover sides of the plate part 110P. In some embodiments, the third and fourth sidewalls 113, 114 may be disposed on the plate part 110P.

In some embodiments, the first through fourth sidewalls 111, 112, 113, 114 may be provided by an extrusion process. According to exemplary embodiments, the first to fourth sidewalls 111, 112, 113, 114 may include an internal hollow space, thereby allowing the sidewall 110S to be lightweight. According to exemplary embodiments, the hollow space in the first to fourth sidewalls 111, 112, 113, 114 may be one of a gas venting path, a coolant channel, or the like.

Hereinafter, the technical ideas of the present disclosure are described with reference to an embodiment in which each of the plurality of battery assemblies 120 does not include a module frame. However, this is a non-limiting embodiment and does not in any sense limit the technical ideas of the present disclosure. One of ordinary skill in the art will readily arrive at battery packs employing a plurality of battery assemblies including a module frame, as well as embodiments in which the battery cells are mounted directly within the pack case, based on what is described herein.

The center beam 130 can isolate elements installed on the lower case 110 from each other. Accordingly, the center beam 130 can protect the plurality of battery assemblies 120 while preventing unwanted shorts between them.

The center beam 130 may extend between the third and fourth sidewalls 113, 114. The center beam 130 may extend in the X direction. The center beam 130 may abut the third sidewall 113 and the fourth sidewall 114. The center beam 130 may isolate the plurality of battery assemblies 120 from each other. The center beam 130 may be interposed between the plurality of battery assemblies 120.

The arrangement of the center beam 130 and plurality of battery assemblies 120 illustrated in FIG. 1 is a non-limiting example and is not intended to limit the technical ideas of the present disclosure in any sense. One of ordinary skill in the art will readily arrive at battery packs comprising various arrangements and numbers of center beams and battery assemblies based on what is described herein.

A plurality of exhaust devices 140 may be coupled to the fourth sidewall 114. The fourth sidewall 114 may include a plurality of exhaust holes connected to the plurality of exhaust devices 140. The plurality of exhaust holes may be configured to provide a pathway for exhausting gases and heat within the battery pack 100.

The plurality of exhaust devices 140 may be configured to delay thermal propagation by releasing hot gases inside the battery pack 100 to the outside if at least one of the plurality of battery assemblies 120 is in a thermal runway condition.

Here, thermal runaway of the plurality of battery assemblies 120 is a condition in which a temperature change in the plurality of battery assemblies 120 causes a further acceleration of that temperature change, which is an uncontrollable positive feedback. The plurality of battery assemblies 120 in a thermal runaway state exhibits a rapid increase in temperature and may emit large amounts of high-pressure gases and combustion debris.

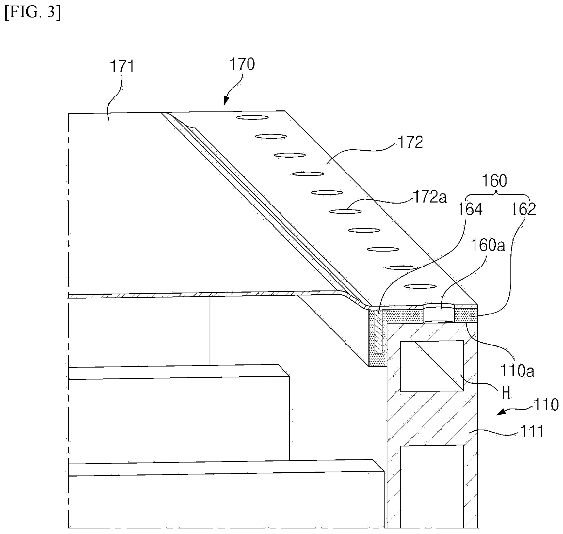

The plurality of first embedment guides 151 may be disposed on the sidewall 110S. The plurality of first embedment guides 151 may be disposed on the corners 110C of the upper surface 110a (see FIG. 3) of the sidewall 110S. The plurality of first embedment guides 151 may be coupled to the corners 110C of the upper surface 110a (see FIG. 3) of the sidewall 110S. The plurality of first embedment guides 151 may be partially embedded in the sidewall 110S. The plurality of first embedment guides 151 may partially protrude from the sidewall 110S.

The plurality of second embedment guides 153 may be disposed on the sidewall 110S. The plurality of second embedment guides 153 may be disposed on the upper surface 110a (see FIG. 3) of the sidewall 110S. The plurality of second embedment guides 153 may be interposed between the corners 110C of the sidewall 110S. The plurality of second embedment guides 153 may be interposed between the plurality of first embedment guides 151. The plurality of second embedment guides 153 may be coupled to an upper surface 110a of the sidewall 110S (see FIG. 3). The plurality of second embedment guides 153 may be partially embedded in the sidewall 110S. The plurality of second embedment guides 153 may partially protrude from the sidewall 110S.

Each of the plurality of first and second embedment guides 151, 153 may include a metallic material. Each of the plurality of first and second embedment guides 151, 153 may include, for example, aluminum. Each of the plurality of first and second embedment guides 151, 153 may include, for example, steel, such as carbon steel, nickel steel, chromium steel, nickel-chromium steel, and manganese steel.

The battery pack 100 may further include electrical components. In some embodiments, the electrical components may be mounted on the lower case 110. In some embodiments, the electrical components may be disposed between the fourth sidewall 114, where the exhaust devices 140 are installed, and the plurality of battery assemblies 120. In some embodiments, the electrical components may include any electronic devices required to drive the battery pack.

In some embodiments, the electronic components may include, for example, a battery management system (BMS). The BMS may be configured to perform monitoring, balancing, controlling, and the like of the battery pack. In some embodiments, monitoring of the battery pack 100 may include measuring voltage and current at specific nodes within the plurality of battery assemblies 120 and measuring temperature at set locations within the battery pack 100. In some embodiments, the battery pack 100 may include instruments for measuring the voltages, currents, and temperatures described above.

Balancing the battery pack 100 is an operation to reduce a deviation between the plurality of battery assemblies 120. Controlling the battery pack 100 includes preventing the occurrence of overcharging, over-discharging, and over-current. Monitoring, balancing, and controlling allows the battery pack 100 to operate under optimal conditions, whereby shortening the life of each of the plurality of battery assemblies 120 may be prevented or reduced.

The electrical components may further include a cooling device, a power relay assembly (PRA), a safety plug, and the like. The cooling device may include a cooling fan. The cooling fan may circulate air within the battery pack 100 to prevent overheating of each of the plurality of battery assemblies 120. The PRA may be configured to supply or disconnect power from the high-voltage battery to an external load (e.g., a motor of a vehicle). The PRA may protect the plurality of battery assemblies 120 and the external load (e.g., a motor of a vehicle) by shutting off the power supply to the external load (e.g., a motor of a vehicle) in the event of an abnormal voltage condition, such as a voltage surge and the like.

The battery pack 100 may further include a plurality of busbars configured to electrically connect the plurality of battery assemblies 120. The plurality of battery assemblies 120 may be connected in series and/or in parallel by the plurality of busbars. Accordingly, the battery pack 100 may be configured to output a high voltage to an external load (e.g., a motor of a vehicle).

A gasket 160 may include a material that stretches in response to an applied pressure. The gasket 160 may include, for example, a rubber synthesized from a material such as an ethylene-propylene diene monomer (EPDM). When the lower case 110 and upper case 170 are coupled, the gasket 160 may be interposed between the lower case 110 and the upper case 170. The lower case 110 and the upper case 170 may pressurize the gasket 160 such that more or less deformation occurs in the gasket 160. Accordingly, the battery pack 100 may be sealed, and external fluids may be kept out of the internal space of the battery pack 100.

The upper case 170 may be coupled to the lower case 110. In some embodiments, the upper case 170 may include a main surface and an edge part. The main surface may cover elements mounted to the battery pack 100, such as the plurality of battery assemblies 120 and electrical components. The edge part is a surface that abuts the lower case 110. In some embodiments, the upper case 170 may have a flat plate shape, in which case the edge part may horizontally surround the main surface. In some embodiments, the main surface may be elevated relative to the edge part, and the edge part and the main surface may be connected by a curved part.

The upper case 170 may be coupled to the sidewall 110S of the lower case 110 by a plurality of first and second embedment guides 151, 153. According to exemplary embodiments, the battery pack 100 may further include elements coupled to the plurality of first and second embedment guides 151, 153 to fix the upper case 170 to the sidewall 110S of the lower case 110. The elements may include, but are not limited to, bolts and nuts.

FIG. 3 is a partial cross-sectional perspective view of a cross-section of the battery pack 100 of FIG. 1 sectioned along line III-III' of FIG. 2.

Referring to FIG. 3, the first sidewall 111 may include a hollow channel H. The first sidewall 111 including the hollow channel H may be lightened by an amount of weight corresponding to the volume of the hollow channel H. Furthermore, the hollow channel H may be utilized as a venting channel for gases generated within the battery pack 100, and may be utilized as a channel for a cooling medium.

The upper case 170 covers the lower case 110 and is coupled to the upper surface 110a of the lower case. In some embodiments, an edge part of the upper case 170 is coupled to the upper surface 110a of the lower case. In some embodiments, the upper case 170 may be configured as a flat plate shape. Alternatively, as shown in FIG. 3, the edge part of the upper case 170 may be formed as a flange part 172, and the inner portion of the edge part of the upper case 170 may be configured as a cover part 171 that bends upwardly from the flange part 172. In this case, the height of the cover part 171 is formed higher than the height of the flange part 172. In this way, when the upper case 170 is configured with the flange part 172 and the cover part 171, the bending stiffness of the upper case 170 may be stronger than that of the upper case 170 in the form of a flat plate shape, making the upper case 170 more robust overall. Additionally, the gap between the upper case 170 and the battery assembly 120 becomes bigger, which may facilitate venting of gases generated within the battery pack 100 through the gap.

A pack gasket 160 is interposed between the upper case 170 and the lower case 110.

The pack gasket 160 may have a shape corresponding to the shape of the sidewall 110S of the lower case 110, and may be provided along the upper surface 110a of the lower case. In some embodiments, the pack gasket 160 may include a plurality of through fastening holes 160a formed at predetermined spacings.

The pack gasket 160 includes a gasket body part 162 and a heat-resistant plastic member 164.

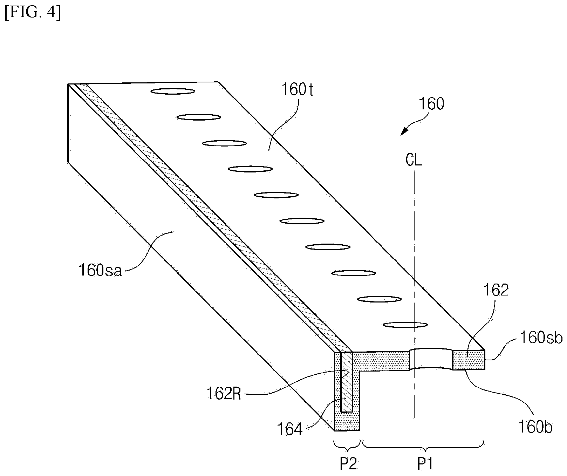

FIG. 4 is a cross-sectional perspective view illustrating a key part of a pack gasket 160 according to an exemplary embodiment of the present disclosure.

Referring to FIGS. 3 and 4, the pack gasket 160 includes a first surface 160t facing the upper case 170 and a second surface 160b facing the lower case 110. The first surface 160t and the second surface 160b may be opposite surfaces of each other. Further, the pack gasket 160 includes a first side part 160sa facing toward the internal space 119 (see FIG. 2) and a second side part 160sb facing toward an external side of the pack case 101. The first side part 160sa and the second side part 160sb are located on opposite sides.

In some embodiments, the pack gasket 160 includes a heat-resistant plastic member 164 between the first side part 160sa and the second side part 160sb in any cross-section in the width direction. In any of the cross-sections, the entire cross-section may be the heat-resistant plastic member 164, or a portion of the cross-section may be the heat-resistant plastic member 164.

In some embodiments, the material of the heat-resistant plastic member 164 may be selected to have no or minimal deformation at high temperatures and no change in shape due to melting or carbonization. Specifically, the material of the heat-resistant plastic member 164 may be selected to have no shape change due to melting or carbonization for a predetermined period of time at a temperature of 600°C or higher, 700°C or higher, 800°C or higher, or 800°C to 1000°C.

The heat-resistant plastic member 164 may include one or more among acrylonitrile-based resins, acrylic-based resins, benzimidazole-based resins, indoline-based resins, imide-based resins, amide-based resins, phenylene oxide-based resins, butylene terephthalate-based resins, fluorinated resins, or copolymers thereof. More specifically, the heat-resistant plastic member 164 may be, for example, one or more selected from the group consisting of modified polyphenylene oxide (MPPO), modified polysulfone (MPSU), polycarbonate (PC), polyamide, polysulfone (PSU), polyethersulfone (PES), polyetherimide (PEI), polyphenylene sulfide, liquid crystal polymer, polyetheretherketone (PEEK), and mixtures thereof, but the present disclosure is not limited thereto.

In some embodiments, the heat-resistant plastic member 164 may include a phenyleneoxide-based resin, such as polyphenyleneoxide (PPO), an amide-based resin, such as nylon, a mixture thereof, or a copolymer thereof. In some embodiments, the phenyleneoxide-based resins and the amide-based resins may be applied in a form in which some of the repeating units are modified.

In some embodiments, the heat-resistant plastic member 164 may further include an inorganic filler and/or a fiber structure.

The inorganic filler may be, for example, but not limited to, silica, alumina, potassium titanate, wollastonite, zonotolite, dawsonite, acicular MgO, acicular magnesium hydroxide, aluminum borate, and the like.

The fiber structure may be, for example, but not limited to, glass fiber, carbon fiber, slag fiber, phosphate fiber, gypsum fiber, aramid fiber, and the like.
The gasket body part 162, for example, may include a rubber synthesized from a material such as an ethylene-propylene diene monomer (EPDM).

Even if a flame occurs in the interior of the battery pack 100 and the flame reaches the interior of the upper case 170 and the lower case 110, the heat-resistant plastic member 164 may protect at least a portion of the gasket body part 162. In other words, by at least partially protecting the gasket body part 162, the heat-resistant plastic member 164 can maintain the sealing performance of the pack gasket 160.

In some embodiments, the gasket body part 162 may include a first part P1 interposed between the upper case 170 and the lower case 110, and a second part P2 extending from the first part P1 toward the internal space 119 (see FIG. 2).

The first part P1 may extend along a coupling surface of the upper case 170 and the lower case 110 between the upper case 170 and the lower case 110, for example, along the upper surface 110a of the lower case. The width of the first part P1 need not be the same as the width of the upper surface 110a of the lower case, but may be about 50% or more, about 55% or more, about 60% or more, about 65% or more, about 70% or more, about 75% or more, about 80% or more, about 85% or more, about 90% or more, or about 95% or more of the width of the upper surface 110a of the lower case.

The second part P2 may be integral with the first part P1, but not interposed between the upper case 170 and the lower case 110. The second part P2 may extend from a side part of the first part P1 along a sidewall of the upper case 170 and/or a sidewall of the lower case 110. In FIG. 3, an example is shown in which the second part P2 extends along a sidewall of the lower case 110, but the present disclosure is not limited to this.

The gasket body part 162 may include a storing part 162R, and the heat-resistant plastic member 164 may be housed within the storing part 162R. In some embodiments, the heat-resistant plastic member 164 may be inserted within the storing part 162R. In some embodiments, the heat-resistant plastic member 164 may be integral with the gasket body part 162 by means of an insert molding method.

In some embodiments, the heat-resistant plastic member 164 may be integrally formed with the gasket body part 162. In some embodiments, the heat-resistant plastic member 164 may be integrated with the gasket body part 162. Here, when the heat-resistant plastic member 164 is integrated with the gasket body part 162, it is meant that the heat-resistant plastic member 164 and the gasket body part 162 were formed separately and then made integral by post-processing.

The heat-resistant plastic member 164 may be disposed closer to the internal space 119 than the center CL of the first side part 160sa and the second side part 160sb. Since the heat-resistant plastic member 164 is disposed closer to the internal space 119 than the center CL, most of the gasket body part 162 is disposed at a position further from the internal space 119 than the heat-resistant plastic member 164. Even if a flame occurs and the flame reaches the inner side of the upper case 170 and the lower case 110, a good sealing performance of the pack gasket 160 can be maintained because most of the gasket body part 162 is protected by the heat-resistant plastic member 164.

In some embodiments, the dimensions of the heat-resistant plastic member 164 in the thickness direction (vertical direction in FIG. 4) of the first part P1 may be equal to or greater than the thickness of the first part P1. Since the first part P1 is interposed between the upper case 170 and the lower case 110, it can be seen that a sealing performance is secured by the first part P1. If the dimensions of the heat-resistant plastic member 164 in the thickness direction (vertical direction in FIG. 4) of the first part P1 are larger than the thickness of the first part P1, the first part P1 can be protected from flame at least throughout the thickness of the first part P1. Therefore, a good sealing performance of the pack gasket 160 may be maintained.

In some embodiments, when the upper case 170 and the lower case 110 are coupled, the upper case 170 and the lower case 110 are spaced apart from each other by at least a thickness of the first part P1. In this case, in the thickness direction (vertical direction in FIG. 4) of the first part P1, the heat-resistant plastic member 164 may extend over at least the separation distance. If the dimension of the heat-resistant plastic member 164 in the thickness direction (vertical direction in FIG. 4) of the first part P1 is larger than the separation distance, the first part P1 interposed between the upper case 170 and the lower case 110 may be protected from flame. Therefore, a good sealing performance of the pack gasket 160 may be maintained.

In some embodiments, the heat-resistant plastic member 164 may not be interposed between the upper case 170 and the lower case 110. In this case, the storing part 162R may be provided in the second part P2.

In some embodiments, the heat-resistant plastic member 164 may be arranged to overlap the first part P1 across the entire thickness of the first part P1 in a lateral direction. By overlapping with the first part P1 over the entire thickness of the first part P1, the first part P1 may be protected from flame over the entire thickness of the first part P1. Therefore, a good sealing performance of the pack gasket 160 may be maintained.

### (Additional embodiments)

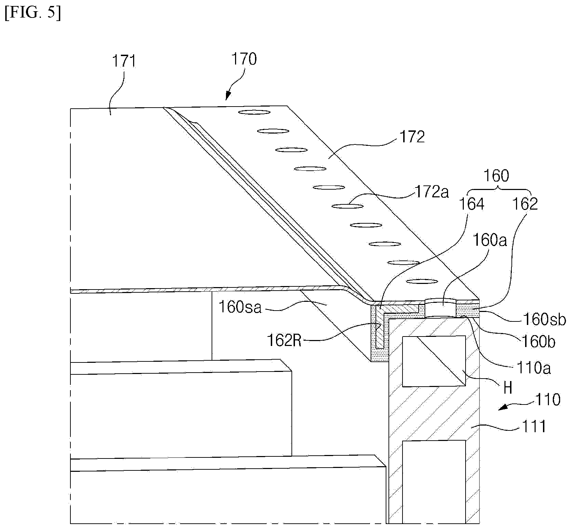

FIG. 5 is a partial cross-sectional perspective view of a cross-section of the battery pack 100 according to another exemplary embodiment of the present disclosure sectioned along lines III-III' of FIG. 2. The embodiment shown in FIG. 5 is substantially identical to the embodiment shown in FIG. 3, except that the cross-sectional shape of the heat-resistant plastic member 164 is different. Accordingly, the following description will focus on the differences between the two embodiments and omit redundant descriptions.

Referring to FIG. 5, the heat-resistant plastic member 164 is partially interposed between the upper case 170 and the lower case 110. In this case, the cross-section of the heat-resistant plastic member 164 may have an inverted L-shape. Furthermore, a portion of the heat-resistant plastic member 164 may have a shape that protrudes from between the upper case 170 and the lower case 110 towards the internal space 119 (see FIG. 2).

Since the heat-resistant plastic member 164 of the present embodiment is partially interposed between the upper case 170 and the lower case 110, it may be possible to more reliably protect the first part P1 of the gasket body part 162 from flame. Thus, a better sealing performance of the pack gasket 160 may be maintained.

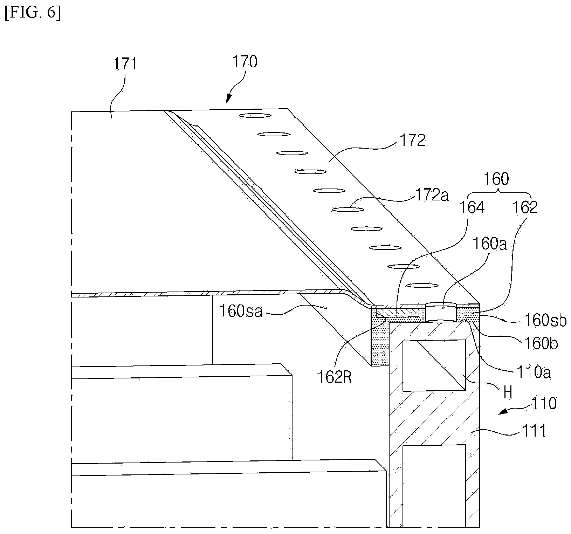

FIG. 6 is a partial cross-sectional perspective view of a cross-section the battery pack 100 according to another exemplary embodiment of the present disclosure sectioned along lines III-III' of FIG. 2. The embodiment shown in FIG. 6 is substantially the same as the embodiment shown in FIG. 5, except that the cross-sectional shape of the heat-resistant plastic member 164 is different. Accordingly, the following description will focus on the differences between the two embodiments and omit redundant descriptions.

Referring to FIG. 6, the dimensions of the heat-resistant plastic member 164 in the thickness direction of the first part P1 are smaller than the thickness of the first part P1. However, the heat-resistant plastic member 164 is partially interposed between the upper case 170 and the lower case 110. Furthermore, a portion of the heat-resistant plastic member 164 may have a shape that protrudes from between the upper case 170 and the lower case 110 toward the internal space 119 (see FIG. 2).

It can be seen that the performance of protecting the first part P1 from flame is somewhat reduced in that the dimensions of the heat-resistant plastic member 164 in the thickness direction are reduced. However, since the heat-resistant plastic member 164 is partially interposed between the upper case 170 and the lower case 110, the performance of protecting the first part P1 from flame may not be impaired overall.

In addition, the rather wide width and shallow insertion depth of the heat-resistant plastic member 164 may facilitate the manufacture of the pack gasket 160 according to the present embodiment, which may be advantageous for mass production.

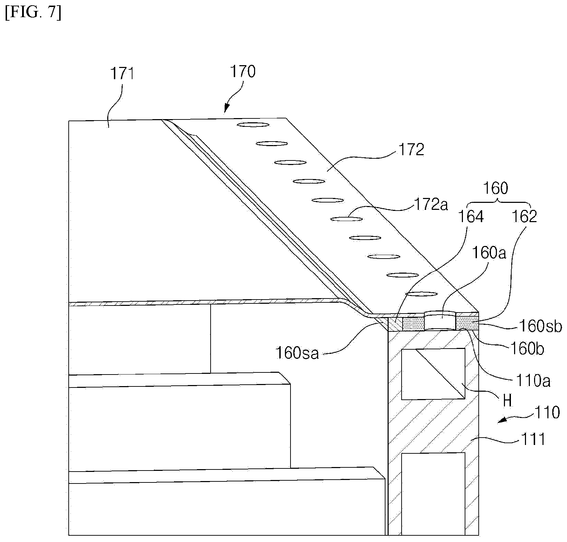

FIG. 7 is a partial cross-sectional perspective view of a cross-section of the battery pack 100 in accordance with another exemplary embodiment of the present disclosure sectioned along lines III-III' of FIG. 2. The embodiment shown in FIG. 7 differs from the embodiments shown in FIGS. 3, 5, and 6 in that the entirety of the heat-resistant plastic member 164 is interposed between the upper case 170 and the lower case 110, and the following description will focus on the differences from the other embodiments and omit redundant descriptions.

Referring to FIG. 7, the entirety of the pack gasket 160 is interposed between the upper case 170 and the lower case 110. That is, the entirety of the gasket body part 162 as well as the heat-resistant plastic member 164 is interposed between the upper case 170 and the lower case 110. The heat-resistant plastic member 164 may extend along the sides of the gasket body part 162. The heat-resistant plastic member 164 is positioned closer to the internal space than the gasket body part 162.

The gasket body part 162 and the heat-resistant plastic member 164 may be coupled together in any manner. For example, the gasket body part 162 and the heat-resistant plastic member 164 may be coupled to each other in an insert molding method. However, the present disclosure is not limited to this.

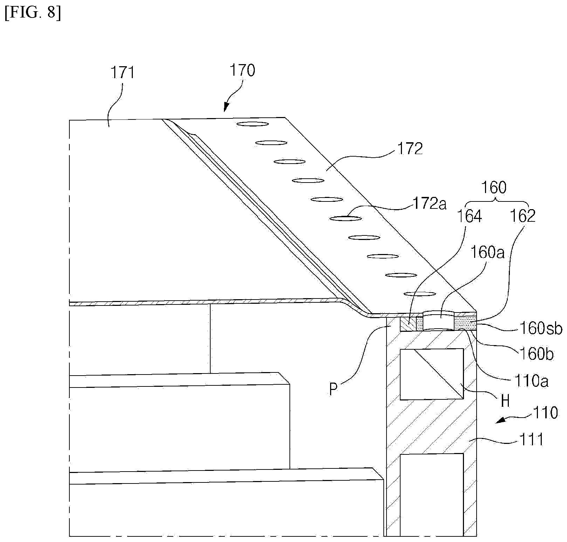

FIG. 8 is a partial cross-sectional perspective view of a cross-section of the battery pack 100 according to another exemplary embodiment of the present disclosure sectioned along lines III-III' of FIG. 2.

Referring to FIG. 8, a protruding sill P is provided on the upper surface 110a of the lower case. Even if a flame is generated inside the battery pack 100 and the flame reaches the inner side of the upper case 170 and the lower case 110, the flame cannot reach the pack gasket 160 because the protruding sill P blocks the pack gasket 160. Furthermore, even if the flame causes thermal energy to pass through the protruding sill P to the pack gasket 160, the gasket body part 162 can maintain its sealing performance because the heat-resistant plastic member 164 protects the gasket body part 162.

The protruding sill P may be located on the upper surface 110a of the lower case along the sides of the pack gasket 160. In some embodiments, the protruding sill P may be integrally formed with the lower case 110. In some embodiments, the protruding sill P may be manufactured separately and then integrated into the upper surface 110a of the lower case by welding, for example.

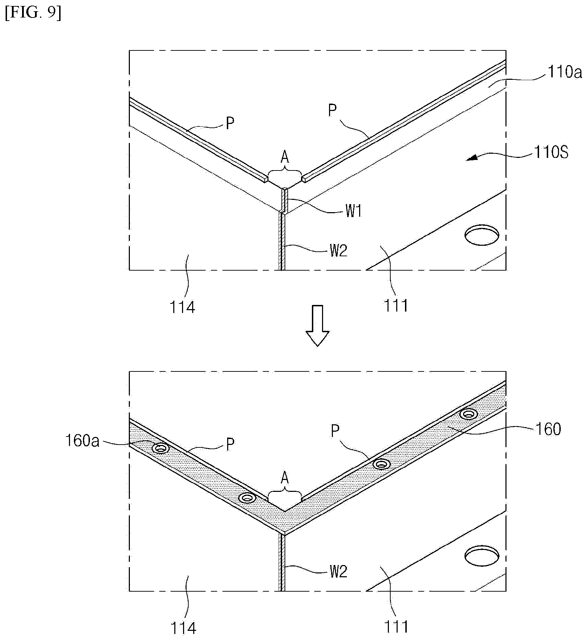

FIG. 9 is a partial perspective view of the battery pack 100 of the present embodiment.

The top view of FIG. 9 illustrates a state in which the pack gasket 160 is not installed on the lower case 110, and the bottom view of FIG. 9 illustrates a state in which the pack gasket 160 is installed on the lower case 110.

As previously described, the first to fourth sidewalls 111, 112, 113, 114 may be fixed to each other by methods such as friction stir welding, spot welding, and the like. For example, the first sidewall 111 and the fourth sidewall 114 may be disposed perpendicular to each other, and their respective ends may be coupled by welding. As a result, welded parts W1, W2 are formed at the corner part where the first sidewall 111 and the fourth sidewall 114 are coupled. Specifically, the welding parts W1, W2 are formed on the upper surface of the corner part and on the side edges of the corner part.

Due to the nature of welding, the welding part W1 may protrude more or less from the upper surface 110a of the lower case. This protrusion may hinder the pack gasket 160 from fitting tightly against the upper surface 110a of the lower case, and thus requires flattening. However, if the protruding sill P extends to the corner part, it becomes very difficult to flatten the protrusion of the welding part W1 and production efficiency is reduced.

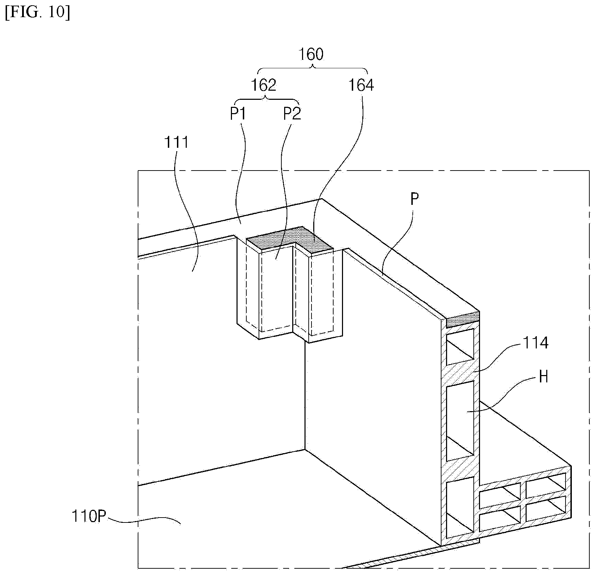

With this in mind, in this embodiment of the battery pack 100, the protruding sill P may not be provided over a predetermined length range A in the vicinity of the corner part. In this case, the pack gasket 160 may be vulnerable to flame at the corner part. To account for this, the pack gasket 160 may need to be reinforced at the corner part. FIG. 10 is a partial perspective view of the lower case 110 mounted with a pack gasket 160 with reinforced corner part.

Referring to FIG. 10, a protruding sill P may be omitted from the corner part, and the pack gasket 160 may extend toward the internal space in the portion where the protruding sill P is omitted. A heat-resistant plastic member 164 may be provided on the portion of the pack gasket 160 extending toward the internal space.

In some embodiments, the gasket body part 162 belonging to the second part P2 may extend horizontally from the gasket body part 162 belonging to the first part P1 toward the internal space. Furthermore, the gasket body part 162 belonging to the second part P2 may extend vertically along the first sidewall 111 and the fourth sidewall 114. A storing part may be formed in the second part P2 of the gasket body part 162, and a heat-resistant plastic member 164 may be provided in the storing part.

One of ordinary skill in the art will understand that the configuration of the pack gasket 160 at the corner part is not limited to that shown in FIG. 10, but that the various embodiments described with reference to FIGS. 5 through 7 may be applied with appropriate modifications. In addition, while FIG. 10 describes the corner part where the first sidewall 111 and the fourth sidewall 114 meet, one of ordinary skill in the art will understand that the same may be applied to other corner parts.

In FIG. 10, the sides of the heat-resistant plastic member 164 are shown as being enclosed by the gasket body part 162 without being exposed, but the present disclosure is not limited to this. In some embodiments, the sidewall of the second part P2 extending vertically along the first sidewall 111 and the fourth sidewall 114 may include hole(s) exposing the heat-resistant plastic member 164.

The battery pack 100 of the exemplary embodiment described with reference to FIGS. 9 and 10 may have the pack gasket 160, and in particular the first part P1 of the gasket body part 162, protected by a protruding sill P in the portion where the first to fourth sidewalls 111, 112, 113, 114 extend horizontally. Furthermore, the first part P1 of the battery pack 100 may be protected by a heat-resistant plastic member 164 provided in the gasket body part 162 at the corner part where the first to fourth sidewalls 111, 112, 113, 114 meet each other. As a result, the entirety of the first part P1 interposed between the upper case 170 and the lower case 110 may be protected, and the sealing performance of the pack gasket 160 may be maintained even when exposed to high temperatures and/or flame.
Although exemplary embodiments of the present disclosure have been described in detail above, one of ordinary skill in the art to which the present disclosure belongs will be able to make numerous modifications to the present disclosure without departing from the spirit and scope of the present disclosure as defined in the appended claims. Accordingly, future modifications to exemplary embodiments of the present disclosure will not depart from the art of the present disclosure.

## Claims

1. A battery pack, comprising:
a pack case including a lower case and an upper case that define an internal space;
a plurality of battery cells within the internal space; and
a pack gasket between the lower case and the upper case,
wherein the pack gasket comprises:
a first surface facing the upper case;
a second surface opposite the first surface and facing the lower case;
a first side part facing toward the internal space; and
a second side part facing an external side of the pack case, and
wherein the pack gasket comprises a heat-resistant plastic member at least partially between the first side part and the second side part in any cross-section in a width direction.

2. The battery pack of claim 1, wherein:
the heat-resistant plastic member extends at least partially along a coupling surface of the upper case and the lower case, and
the heat-resistant plastic member is positioned closer to the internal space than a center between the first side part and second side part.

3. The battery pack of claim 1, wherein:
the pack gasket comprises a gasket body part and the heat-resistant plastic member,
the gasket body part includes a storing part, and
the heat-resistant plastic member is disposed within the storing part.

4. The battery pack of claim 3, wherein the gasket body part comprises:
a first part interposed between the upper case and the lower case; and
a second part extending from the first part into the internal space and extending along a sidewall of the upper case and/or the lower case.

5. The battery pack of claim 4, wherein in a thickness direction of the first part, a size of the heat-resistant plastic member is greater than a thickness of the first part.

6. The battery pack of claim 4, wherein the heat-resistant plastic member is arranged to overlap the first part across an entire thickness of the first part.

7. The battery pack of claim 3, wherein the heat-resistant plastic member is integrally formed or is integrated with the gasket body part.

8. The battery pack of claim 7, wherein the heat-resistant plastic member is integrated with the gasket body part by insert molding.

9. The battery pack of claim 7, wherein the heat-resistant plastic member comprises at least one resin selected from the group consisting of an acrylonitrile-based resin, an acrylic-based resin, a benzimidazole-based resin, an indoline-based resin, an imide-based resin, an amide-based resin, a phenylene oxide-based resin, a butylene terephthalate-based resin, a fluorine-based resin, and a copolymer thereof.

10. A battery pack comprising:
a pack case including a lower case and an upper case that define an internal space;
a plurality of battery cells within the internal space; and
a pack gasket between the lower case and the upper case,
wherein the pack gasket comprises a heat-resistant plastic member and a gasket body part extending along a coupling surface of the upper case and the lower case, and
wherein the heat-resistant plastic member is integrated with the gasket body part.

11. The battery pack of claim 10, wherein:
the gasket body part includes a storing part, and
the heat-resistant plastic member is inserted within the storing part.

12. The battery pack of claim 10, wherein the heat-resistant plastic member extends at least across a separation distance of the upper case and the lower case.

13. The battery pack of claim 10, wherein the heat-resistant plastic member is interposed at least partially between the upper case and the lower case.

14. The battery pack of claim 13, wherein at least a part of the heat-resistant plastic member is protruded from the gasket body part between the upper case and the lower case toward the internal space.

15. The battery pack of claim 10, wherein the heat-resistant plastic member is not interposed between the upper case and the lower case.
